# EUROPEAN PATENT APPLICATION

(11) **EP 4 542 695 A1**
(43) Date of publication of application: **23.04.2025**
(21) Application number: 23823467.8
(22) Date of filing: 13.03.2023
(51) Int. Cl.: H01M 8/18

(54) **TANK AND REDOX FLOW BATTERY SYSTEM**

(30) Priority: 16.06.2022 JP 2022097117
(71) Applicant: SUMITOMO ELECTRIC INDUSTRIES, LTD., Osaka-shi, Osaka 541-0041 (JP)
(72) Inventor: FUJITA, Hayato, Osaka-shi, Osaka 541-0041 (JP)
(74) Representative: Müller-Boré & Partner Patentanwälte PartG mbB
(86) International application number: PCT/JP2023/009608
(87) International publication number: WO 2023/243163

(57) **Abstract**

A tank for storing an electrolyte in a redox flow battery system includes a tank body which has an internal space separated from the outside, and a cover member, at least a surface of which is solid, wherein the cover member is disposed to float on a liquid surface of the electrolyte stored in the internal space so as to cover the liquid surface, and an area of the liquid surface that is covered by the cover member is 0.90 times or more and 0.99 times or less the entire area of the liquid surface.

## Description

### TECHNICAL FIELD

The present disclosure relates to a tank and a redox flow battery system. The present application claims the benefit of priority to Japanese Patent Application No. 2022-097117 filed on June 16, 2022. The entire contents described in the Japanese Patent Application are incorporated herein by reference.

### BACKGROUND ART

PTL 1 discloses an electrolyte tank that stores an electrolyte to be repeatedly supplied to a battery cell of a redox flow battery. The electrolyte tank is open to the air. An air shield member is disposed above the electrolyte.

### CITATION LIST

### PATENT LITERATURE

PTL 1: Japanese Patent Laying-Open No. 2000-012065

### SUMMARY OF INVENTION

A tank of the present disclosure is a tank for storing an electrolyte in a redox flow battery system. The tank includes a tank body which has an internal space separated from the outside, and a cover member, at least a surface of which is solid. The cover member is disposed to float on a liquid surface of the electrolyte stored in the internal space so as to cover the liquid surface, and an area of the liquid surface that is covered by the cover member is 0.90 times or more and 0.99 times or less the entire area of the liquid surface.

A redox flow battery system of the present disclosure includes the tank of the present disclosure.

### BRIEF DESCRIPTION OF DRAWINGS

Fig. 1 is a schematic view illustrating a configuration of a tank according to an embodiment;
Fig. 2 is an explanatory view illustrating an example of a cover member provided in the tank according to the embodiment;
Fig. 3 is an explanatory view illustrating another example of a cover member provided in the tank according to the embodiment;
Fig. 4 is an explanatory view illustrating another example of a cover member provided in the tank according to the embodiment;
Fig. 5 is a schematic view illustrating a configuration of a redox flow battery system according to an embodiment; and
Fig. 6 is a schematic view illustrating a configuration of a cell stack in the redox flow battery system according to the embodiment.

### DETAILED DESCRIPTION

### [Problem to be Solved by the Present Disclosure]

It is desired to inhibit oxidation of the electrolyte in the tank. Oxidation of the electrolyte refers to oxidation of active material ions in the electrolyte. When the electrolyte is oxidized, the amount of active material ions for the battery reaction in the battery cell is reduced. As a result, the energy density in the redox flow battery system may be reduced.

It is an object of the present disclosure to provide a tank capable of inhibiting oxidation of an electrolyte stored therein. Another object of the present disclosure is to provide a redox flow battery system with a high energy density.

### [Advantageous Effect of the Present Disclosure]

The tank of the present disclosure can inhibit oxidation of the electrolyte stored therein. The redox flow battery system of the present disclosure can have a high energy density.

### [Description of Embodiments of the Present Disclosure]

First, embodiments of the present disclosure will be summarized.
(1) A tank according to an embodiment of the present disclosure is a tank for storing an electrolyte in a redox flow battery system. The tank includes a tank body which has an internal space separated from the outside, and a cover member, at least a surface of which is solid. The cover member is disposed to float on a liquid surface of the electrolyte stored in the internal space so as to cover the liquid surface, and an area of the liquid surface that is covered by the cover member is 0.90 times or more and 0.99 times or less the entire area of the liquid surface.
   According to the tank of the present disclosure, oxidation of the electrolyte in the tank can be effectively inhibited by two configurations. The first configuration is the internal space of the tank body that is separated from the outside. According to the first configuration, the electrolyte stored in the internal space is practically not in contact with the outside air. Therefore, oxidation of the electrolyte stored in the internal space due to contact with external oxygen is significantly inhibited. The second configuration is the cover member that is provided to float on the liquid surface of the electrolyte. The cover member prevents the electrolyte from contacting oxygen that may be present in the internal space. According to the second configuration, oxidation of the electrolyte is inhibited even if a small amount of oxygen is present in the internal space. When the surface of the cover member is solid, it is easy to ensure a contact surface between the cover member and the electrolyte, which makes it easy to inhibit oxidation of the electrolyte.
(2) **In** the tank according to (1) in the above, a maximum length of the tank body in the horizontal direction may be longer than a height of the tank body.
   If the cover member is not disposed on the liquid surface of the electrolyte, the liquid surface of the electrolyte is exposed to the air in the internal space. The flow resistance of the liquid surface of the electrolyte exposed to the air and the vicinity thereof is smaller than the flow resistance of the interior of the electrolyte. The interior of the electrolyte includes the surface of the electrolyte in contact with the inner surface of the tank body and the vicinity thereof. Due to the difference in the flow resistance, the flow velocity is faster at the liquid surface of the electrolyte and in the vicinity thereof, the flow velocity is slower inside the electrolyte, and thereby the flow of the electrolyte becomes uneven. When the maximum length of the tank body in the horizontal direction is longer than the height of the tank body, and if the cover member is not disposed on the liquid surface of the electrolyte, the area of the liquid surface of the electrolyte exposed to the air in the internal space is relatively larger, and thereby the flow of the electrolyte is likely to become uneven. When the cover member is disposed to float on the liquid surface of the electrolyte, the flow resistance of the liquid surface of the electrolyte and the vicinity thereof increases, and therefore, the flow of the electrolyte is likely to become uniform even when the maximum length of the tank body in the horizontal direction is longer than the height of the tank body. Since the flow of the electrolyte is uniform, the electrolyte stored in the internal space may be utilized efficiently.
(3) In the tank according to (1) or (2) in the above, the cover member may be formed of a plurality of split pieces.
   According to the configuration of (3) in the above, the size of each split piece is adjustable. If the size of each split piece is adjustable, it is easy to prepare the cover member and it is easy to transport and store the cover member than the case where the cover member is a single member. If the cover member is formed of a plurality of split pieces, it is easy to dispose the cover member on the liquid surface of the electrolyte.
(4) In the tank according to (3) in the above, an area of the liquid surface that is covered by each of the plurality of split pieces may be 0.002 times or more and 0.99 times or less the entire area of the liquid surface.
   If each split piece is too small, the flow of the electrolyte may drift each split piece from its predetermined position. If each split piece is too large, it is difficult to dispose each split piece on the liquid surface of the electrolyte. According to the configuration of (4) in the above, it is easy to dispose each split piece on the liquid surface of the electrolyte, and it is difficult for each split piece disposed on the liquid surface of the electrolyte to be drifted from its predetermined position.
(5) In the tank according to (3) or (4) in the above, each of the plurality of split pieces may be a plate.
   The split piece formed of a plate easily ensures a large contact area with the electrolyte. According to the configuration of (5) in the above, since all the split pieces are plates, it is easy to inhibit oxidation of the electrolyte.
(6) In the tank according to (5) in the above, the plate may have a quadrangular shape or a hexagonal shape.
   When the plate has a quadrangular shape or a hexagonal shape, it is easy to arrange a plurality of plates with no gap therebetween. According to the configuration of (6), it is easy to arrange the plurality of plates with no gap therebetween, which makes it easy to inhibit oxidation of the electrolyte.
(7) In the tank according to (3) or (4) in the above, each of the plurality of split pieces may be a plate, and the plate may have a hexagonal shape.
   The split piece formed of the plate easily ensures a large contact area with the electrolyte. When the plate has a hexagonal shape, it is easy to arrange a plurality of plates with no gap therebetween, and it is easy to stably maintain the arranged state of the plurality of plates. According to the configuration of (7) in the above, it is easy to arrange the plurality of plates with no gap therebetween, which makes it easy to inhibit oxidation of the electrolyte.
(8) In the tank according to (1) or (2) in the above, the cover member may be a single plate.
   According to the configuration of (8) in the above, it is easy to ensure a large contact area between the cover member and the electrolyte, which makes it easy to inhibit oxidation of the electrolyte.
(9) In the tank according to any one of (1) to (8) in the above, the tank body may include an intake port and an exhaust port configured to circulate a non-oxidizing air in the internal space.
   According to the configuration of (9) in the above, it is possible to circulate the non-oxidizing gas in the internal space, which makes it easy to inhibit oxidation of the electrolyte stored in the internal space.
(10) A redox flow battery system according to an embodiment of the present disclosure includes the tank according to any one of (1) to (9) in the above.
   Since the redox flow battery system of the present disclosure includes the tank of the present disclosure, it is easy to inhibit oxidation of the electrolyte in the tank, and it is possible to prevent the amount of active material ions used for a battery reaction in a battery cell from decreasing. As a result, the redox flow battery system of the present disclosure has a high energy density.
(11) The redox flow battery system according to (10) in the above may further include an electrolyte stored in the internal space, and the tank body may include a gas phase space in which a non-oxidizing gas is circulated above the cover member in the internal space.

According to the configuration of (11) in the above, it is easy to inhibit oxidation of the electrolyte stored in the internal space.

### [Details of Embodiments of the Present Disclosure]

Hereinafter, specific examples of a tank and a redox flow battery system of the present disclosure will be described with reference to the drawings. In the drawings, the same or corresponding parts will be denoted by the same reference numerals. In the drawings, a part of the configuration may be exaggerated or simplified for convenience of description. The dimensional ratio of each part in the drawings may be different from the actual dimensional ratio. The present invention is not limited to these examples but defined by the scope of the claims, and is intended to encompass all modifications equivalent in meaning and scope to the claims. Hereinafter, the redox flow battery system may be referred to as the "RF battery system".

### <Tank>

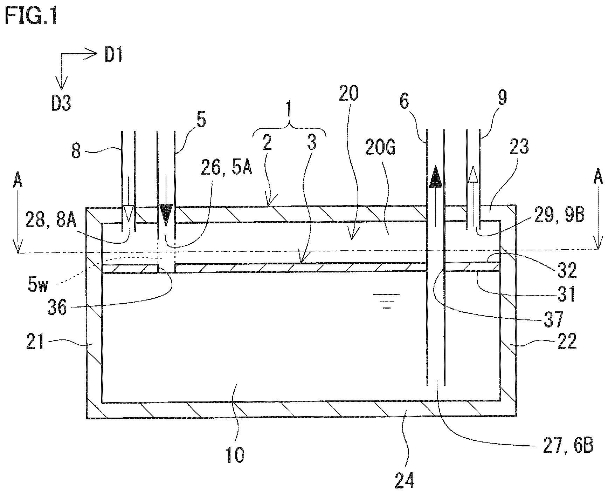

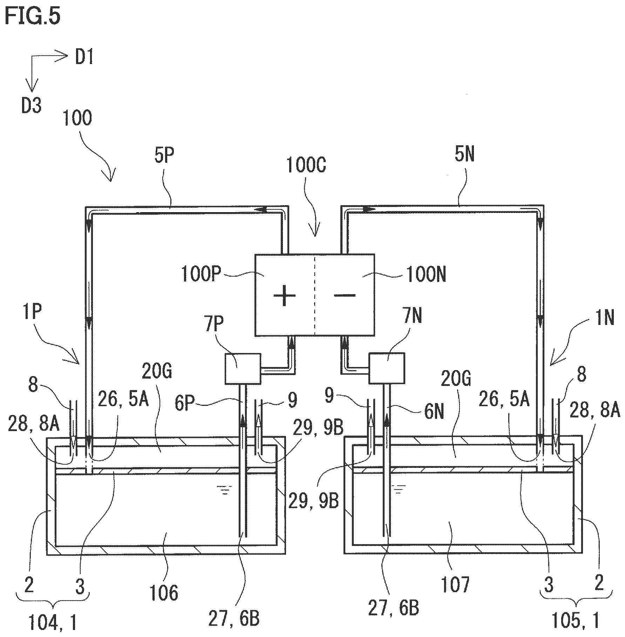

A tank 1 according to an embodiment will be described with reference to Figs. 1 to 4. The tank 1 according to the embodiment is a positive electrolyte tank 104 for storing a positive electrolyte 106 or a negative electrolyte tank 105 for storing a negative electrolyte 107 of an RF battery system 100 (Fig. 5), which will be described later. In the following description of the tank 1, the positive electrolyte 106 and the negative electrolyte 107 illustrated in Fig. 5 will not be distinguished from each other, and are simply referred to as an "electrolyte 10". Fig. 1 illustrates a state in which the electrolyte 10 is stored.

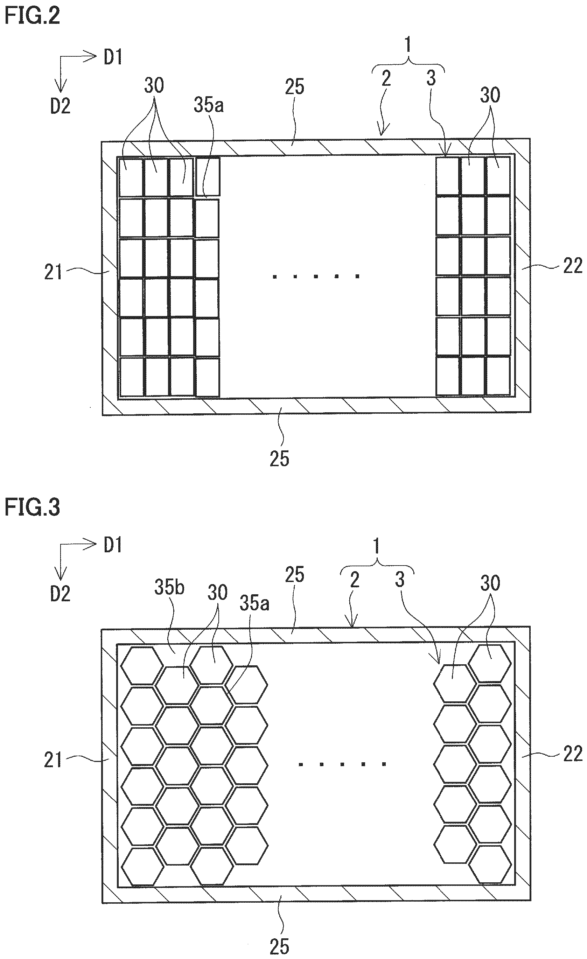

As illustrated in Fig. 1, the tank 1 includes a tank body 2 and a cover member 3. One feature of the tank 1 is that the tank body 2 includes an internal space 20 separated from the outside, and the cover member 3 is disposed to float on the liquid surface of the electrolyte 10 stored in the internal space 20. Hereinafter, the tank body 2 and the cover member 3 will be described in detail. The tank 1 illustrated in Fig. 1 is illustrated in a cross section obtained by cutting the tank 1 in a plane along the height direction of the tank body 2. The tank 1 illustrated in Figs. 2 to 4 is illustrated in a cross section taken along the line A-A of Fig. 1.

### (Tank Body)

As illustrated in Fig. 1, the tank body 2 is a container having an internal space 20 in which the electrolyte 10 is stored. The tank body 2 is a columnar body. The columnar body is, for example, a prismatic body or a cylindrical body. The prismatic body is, for example, a quadrangular prism. The quadrangular prism includes a rectangular parallelepiped prism and a cubic prism. The planar shape of the two opposing surfaces of the quadrangular prism may be a quadrangular shape other than a square or a rectangle, such as a rhombus or a trapezoid. The tank body 2 has, for example, a uniform cross-sectional shape in a first direction D1 of the tank body 2. The tank body 2 having a uniform cross-sectional shape in the first direction D1 is, for example, a rectangular parallelepiped body, a cubic body, or a cylindrical body. The shape of the tank body 2 of the present embodiment is a rectangular parallelepiped body. In the present embodiment, the internal space 20 of the tank body 2 is also a rectangular parallelepiped body.

The tank body 2 is represented by a first direction D1, a second direction D2, and a third direction D3 in a three-dimensional orthogonal coordinate system. The first direction D1 in the present embodiment is the longitudinal direction of the tank body 2. The first direction D1 in the present embodiment is also the longitudinal direction of the internal space 20 of the tank body 2. The first direction D1 in the present embodiment is the horizontal direction. The second direction D2 in the present embodiment is the width direction of the tank body 2. The second direction D2 in the present embodiment is also the width direction of the internal space 20 of the tank body 2. The second direction D2 is orthogonal to the paper surface in Fig. 1. The third direction D3 in the present embodiment is the height direction of the tank body 2. The third direction D3 in the present embodiment is also the height direction of the internal space 20 of the tank body 2. The tank body 2 of the present embodiment is disposed in a horizontally long manner. In other words, in the present embodiment, the maximum length of the tank body 2 in the horizontal direction is longer than the height of the tank body 2. In the present embodiment, the second direction D2 and the third direction D3 are orthogonal to the first direction D1. In the present embodiment, the second direction D2 and the third direction D3 are orthogonal to each other.

As illustrated in Figs. 1 and 2, the tank body 2 of the present embodiment includes a first end wall 21, a second end wall 22, an upper wall 23, a lower wall 24, and two side walls 25 and 25. As illustrated in Figs. 1 and 2, the first end wall 21 and the second end wall 22 face each other in the first direction D1. As illustrated in Fig. 1, the upper wall 23 and the lower wall 24 face each other in the third direction D3. As illustrated in Fig. 2, the two side walls 25 and 25 face each other in the second direction D2. The thickness of each of the first end wall 21, the second end wall 22, the upper wall 23, the lower wall 24, and the two side walls 25 and 25 may be appropriately selected. The internal space 20 is a space surrounded by the first end wall 21, the second end wall 22, the upper wall 23, the lower wall 24, and the two side walls 25 and 25. Since the internal space 20 is isolated from the outside, and the outside air is prevented from entering the internal space 20. The first end wall 21, the second end wall 22, the upper wall 23, the lower wall 24, and the two side walls 25 and 25 prevent the electrolyte 10 stored in the internal space 20 from coming into contact with the outside air.

A first length of the tank body 2 in the first direction D1 is, for example, 4.5 m or more and 13 m or less. As illustrated in Figs. 1 and 2, the first length is a length between an outer surface of the first end wall 21 and an outer surface of the second end wall 22. When the first length is 4.5 m or more, a large internal space 20 is ensured, which enables a large amount of the electrolyte 10 to be stored. When the first length is 13 m or less, the tank body 2 is prevented from becoming excessive large. The first length may be 4.5 m or more and 12 m or less, 5 m or more and 11.5 m or less, or 6 m or more and 10 m or less.

A second length of the tank body 2 in the second direction D2 is, for example, 1 m or more and 3 m or less. As illustrated in Fig. 2, the second length is a length between the outer surfaces of the two side walls 25 and 25 facing each other in the second direction D2. When the second length is 1 m or more, a large internal space 20 is ensured, which enables a large amount of the electrolyte 10 to be stored. When the second length is 3 m or less, the tank body 2 is prevented from becoming excessive large. The second length may be 1.5 m or more and 2.5 m or less.

A third length of the tank body 2 in the third direction D3 is, for example, 1 m or more and 3 m or less. The third length is a length between outer surfaces of the two upper wall 23 and lower wall 24 facing each other in the third direction D3 illustrated in Fig. 1. When the third length is 1 m or more, a large internal space 20 is ensured, which enables a large amount of the electrolyte 10 to be stored. When the third length is 3 m or less, the tank body 2 is prevented from becoming excessive large. The third length may be 1.5 m or more and 2.5 m or less.

The tank body 2 having a rectangular parallelepiped shape may be, for example, a 20-ft container-type tank or a 40-ft container-type tank conforming to the ISO standard. In a 40-ft container-type tank body 2, the first length is 12192 mm, the second length is 2438 mm, and the third length is 2591 mm. In a high-cube 40-ft container-type tank body 2, the first length is 12192 mm, the second length is 2438 mm, and the third length is 2896 mm. The container-type tank body 2 is excellent in installation and transportation.

The inner surface of the tank body 2 is made of resin or rubber resistant to the electrolyte 10. The resin is, for example, polyvinyl chloride, polypropylene, polyethylene, polytetrafluoroethylene, or a vinyl fluoride compound. The rubber is, for example, natural rubber, chloroprene rubber, butyl rubber, ethylene propylene rubber, silicone rubber, or fluorine rubber.

As illustrated in Fig. 1, the tank body 2 includes an inlet 26 for the electrolyte 10 and an outlet 27 for the electrolyte 10. The inlet 26 and the outlet 27 are provided apart from each other in the first direction D1. The flow of the electrolyte 10 will be described later.

The inlet 26 is an open end 5A of a first pipe 5 to be described later. The first pipe 5 penetrates the upper wall 23 and extends from the outside of the tank body 2 into the internal space 20. The inlet 26 is provided inside the internal space 20. The opening direction of the inlet 26 is in the third direction D3. The shape of the inlet 26 may be appropriately selected.

The outlet 27 is an open end 6B of a second pipe 6 to be described later. The second pipe 6 penetrates the upper wall 23 and extends from the outside of the tank body 2 into the internal space 20. The outlet 27 is provided inside the internal space 20. The opening direction of the outlet 27 is in the third direction D3. The shape of the outlet 27 may be appropriately selected.

The distance between the inlet 26 and the outlet 27 is, for example, 4 m or more and 11.5 m or less. The distance between the inlet 26 and the outlet 27 is the shortest distance between a central axis of the inlet 26 and a central axis of the outlet 27. When the distance is 4 m or more, the inlet 26 and the outlet 27 are separated from each other, which makes it possible to efficiently utilize the electrolyte 10 in the tank body 2. When the distance is 11.5 m or less, the tank body 2 is prevented from becoming excessive large. The distance may be 4 m or more and 11 m or less, 4.5 m or more and 11 m or less, and particularly 5.5 m or more and 9.5 m or less.

As illustrated in Fig. 1, the tank body 2 includes an intake port 28 and an exhaust port 29 configured to circulate a non-oxidizing air in the internal space 20. The intake port 28 and the exhaust port 29 are provided apart from each other in the first direction D1. The circulation of the non-oxidizing gas will be described later.

The intake port 28 is an open end 8A of a third pipe 8 to be described later. The third pipe 8 of the present embodiment penetrates the upper wall 23 and extends from the outside of the tank body 2 into the internal space 20. The intake port 28 is provided inside the internal space 20. The opening direction of the intake port 28 in the present embodiment is in the third direction D3. The shape of the intake port 28 may be appropriately selected.

The exhaust port 29 is an open end 9B of a fourth pipe 9 to be described later. The fourth pipe 9 of the present embodiment penetrates the upper wall 23 and extends from the outside of the tank body 2 into the internal space 20. The exhaust port 29 is provided inside the internal space 20. The opening direction of the exhaust port 29 in the present embodiment is in the third direction D3. The shape of the exhaust port 29 may be appropriately selected.

### (Cover Member)

As illustrated in Fig. 1, the cover member 3 is disposed to float on the liquid surface of the electrolyte 10 so as to cover the liquid surface of the electrolyte 10 stored in the internal space 20 of the tank body 2. The specific gravity of the cover member 3 is smaller than the specific gravity of the electrolyte 10. When the specific gravity of the electrolyte 10 is 1, the specific gravity of the cover member 3 is, for example, 0.3 or more and 0.99 or less. The specific gravity of the cover member 3 is larger than the specific gravity of the non-oxidizing gas to be circulated in a gas phase space 20G which will be described later. The cover member 3 is separate from the tank body 2. The cover member 3 is not fixed to the tank body 2. The liquid level of the electrolyte 10 may fluctuate in the internal space 20 in the vertical direction. The cover member 3 can follow the fluctuation of the liquid level of the electrolyte 10.

The cover member 3 is a member that prevents the electrolyte 10 stored in the internal space 20 from being oxidized, and in particular is a member that prevents the electrolyte 10 from coming into contact with oxygen that may be present in the internal space 20. At least the surface of the cover member 3 is solid. The entire cover member 3 may be solid, or only the surface thereof may be solid so as to enclose the gas. When the surface of the cover member 3 is solid, the contact surface of the cover member 3 with the electrolyte 10 is favorably ensured, which makes it easy to inhibit oxidation of the electrolyte 10.

An area of the liquid surface of the electrolyte 10 that is covered by the cover member 3 is 0.90 times or more and 0.99 times or less the entire area of the liquid surface of the electrolyte 10. Hereinafter, the area of the liquid surface of the electrolyte 10 that is covered by the cover member 3 may be referred to as the "area of the cover member 3". The entire area of the liquid surface of the electrolyte 10 depends on the size of the internal space 20. The entire area of the liquid surface of the electrolyte 10 is equal to the plane area of the inner surface of the upper wall 23 or the lower wall 24. The entire area of the liquid surface of the electrolyte 10 is equal to the plane area of a region surrounded by the inner surfaces of the first end wall 21, the second end wall 22, and the two side walls 25 and 25. The electrolyte 10 is introduced into the internal space 20 by the first pipe 5 to be described later, and is discharged from the internal space 20 by the second pipe 6 to be described later. The cover member 3 is provided with an opening 36 corresponding to the first pipe 5 and an opening 37 corresponding to the second pipe 6. When the area of the cover member 3 is 0.99 times or less the entire area of the liquid surface of the electrolyte 10, it is easy to provide the opening 36 and the opening 37. When the area of the cover member 3 is 0.90 times or more the entire area of the liquid surface of the electrolyte 10, the cover member 3 covers the liquid surface of the electrolyte 10 over a wide range, which inhibits oxidation of the electrolyte 10. The area of the cover member 3 may be 0.95 times or more and 0.98 times or less the entire area of the liquid surface of the electrolyte 10.

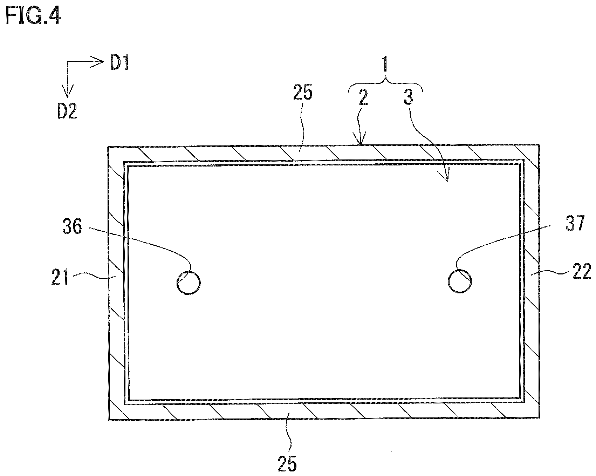

In the present embodiment, the open end 5A of the first pipe 5 is disposed above the liquid surface of the electrolyte 10 with an interval therebetween. The opening 36 is provided at a position where the open end 5A is projected onto the liquid surface of the electrolyte 10. When the cover member 3 is formed of a plurality of split pieces 30 as illustrated in Figs. 2 and 3, the opening 36 is formed by a gap provided between the plurality of split pieces 30. The size of the gap is preferably equal to or larger than the size of the open end 5A. The plurality of split pieces 30 constituting the gap should be disposed so as not to obstruct the flow of the electrolyte 10 flowing out from the open end 5A. In Figs. 2 and 3, the opening 36 is not shown. When the cover member 3 is formed of a single plate as illustrated in Fig. 4, the opening 36 is formed as a through hole provided in the plate. The electrolyte 10 is exposed from the opening 36.

A guide member 5w may be disposed so as to connect the open end 5A to the opening 36. The guide member 5w is illustrated in the figure by a dotted line for clarity. The guide member 5w may be formed by, for example, a plurality of walls fixed to the first pipe 5. The plurality of walls are disposed at equal intervals in the circumferential direction of the first pipe 5. Each wall extends from the open end 5A to the opening 36. A gap is provided between the adjacent walls. This gap is provided to release the pressure of the electrolyte 10 from the first pipe 5. The guide member 5w also functions to prevent the cover member 3, i.e., each split piece 30 in Figs. 2 and 3 from entering the opening 36. The cover member 3 is disposed to surround the guide member 5w. The electrolyte 10 introduced from the first pipe 5 is guided to the opening 36 by means of the guide member 5w without substantially affecting the cover member 3.

In the present embodiment, the open end 6B of the second pipe 6 is disposed in the electrolyte 10. The second pipe 6 penetrates the opening 37. The cover member 3 is disposed to surround the second pipe 6.

As illustrated in Figs. 2 and 3, the cover member 3 may be formed of a plurality of split pieces 30. In other words, the cover member 3 may be formed of a collection of the plurality of split pieces 30. In Figs. 2 and 3, a part of each split piece 30 is illustrated. When the tank body 2 is large such as a 20-ft container, it is difficult to dispose a large and single cover member 3 on the liquid surface of the electrolyte 10 so as to substantially cover the entire surface of the liquid surface of the electrolyte 10. If the cover member 3 is formed of a plurality of split pieces 30, the size of each split piece 30 can be adjusted. Thus, the cover member 3 can be easily prepared by adjusting the size of each split piece 30. When the cover member 3 is formed of a plurality of split pieces 30, it is easy to dispose the cover member 3 on the liquid surface of the electrolyte 10. When the cover member 3 is formed of a plurality of split pieces 30, each split piece 30 individually follows the fluctuation of the liquid level of the electrolyte 10, which makes the movement of the cover member 3 smooth.

The area of the liquid surface of the electrolyte 10 that is covered by each split piece 30 is, for example, 0.002 times or more and 0.01 times or less the entire area of the liquid surface of the electrolyte 10. Hereinafter, the area of the liquid surface of the electrolyte 10 that is covered by each split piece 30 may be referred to as the "area of each split piece 30". The area of each split piece 30 is equal to the area of the liquid surface of the electrolyte 10 that is covered by each split piece 30. If each split piece 30 is too small, the flow of the electrolyte 10 may drift each split piece 30 from its predetermined position. If the area of each split piece 30 is 0.002 times or more the entire area of the liquid surface of the electrolyte 10, each split piece 30 is less likely to be affected by the flow of the electrolyte 10, and is less likely to be drifted from the predetermined position. If the area of each split piece 30 is 0.01 times or less the entire area of the liquid surface of the electrolyte 10, it is easy to prepare each split piece 30, and it is easy to dispose each split piece 30 on the liquid surface of the electrolyte 10. The area of each split piece 30 may be 0.004 times or more and 0.008 times or less the entire area of the liquid surface of the electrolyte 10. The plurality of split pieces 30 may be a combination of only small split pieces 30 having an area in the range described above. The plurality of split pieces 30 may be a combination of the split pieces 30 having the same area or a combination of the split pieces 30 having different areas.

The plurality of split pieces 30 may be a combination of small split pieces 30 and large split pieces 30, each of which has an area in the range described above. The area of the large split piece 30 is, for example, 0.01 times or more and 0.99 times or less the entire area of the liquid surface of the electrolyte 10. If the large split piece 30 is flexible enough to be rolled up or folded up, it can be easily disposed on the liquid surface of the electrolyte 10. The area of the large split piece 30 may be 0.8 times or less, 0.75 times or less, or 0.5 times or less the entire area of the liquid surface of the electrolyte 10. The small split pieces 30 may be disposed so as to cover the liquid surface of the electrolyte 10 which is not covered by the large split pieces 30.

The area of the liquid surface of the electrolyte 10 that is covered by each split piece 30 is preferably 2000 mm² or more and 1200000 mm² or less, more preferably 20000 mm² or more and 100000 mm² or less, and further preferably 40000 mm² or more and 60000 mm² or less. The number of the split pieces 30 depends on the size of the tank body 2, and is preferably 20 or more and 500 or less, and more preferably 50 or more and 200 or less.

Each split piece 30 is disposed in such a manner that the openings 36 and 37 (Fig. 1) are formed in the cover member 3. In Figs. 2 and 3, the openings 36 and 37 are not illustrated for the convenience of explanation.

Each split piece 30 is, for example, a plate. The split piece 30 formed of a plate easily ensures a large contact area with the electrolyte 10. When the contact area between the split pieces 30 and the electrolyte 10 is large, it is easy to inhibit oxidation of the electrolyte 10. The number of the split pieces 30 formed of the plate is, for example, 50% or more, further 70% or more, and 90% or more of the total number of the split pieces 30. The split pieces 30 other than the plate are, for example, spheres. The split piece 30 formed of a sphere will be described later. **In** the present embodiment, all the split pieces 30 are plates.

When the split piece 30 is a plate, the shape of the plate may be appropriately selected. For example, the shape of the plate is flat. The shape of the plate is also the shape of the contact surface of the plate with the electrolyte 10. The plate may have a quadrangular shape as illustrated in Fig. 2 or a hexagonal shape as illustrated in Fig. 3. When the shape of the plate includes straight lines such as a quadrangular shape or a hexagonal shape, it is easy to dispose a plurality of plates without a gap therebetween. A relatively small gap 35a may be formed between the plurality of plates by the flow of the electrolyte 10. Even if the gap 35a is formed, the area of the liquid surface of the electrolyte 10 that is covered by the cover member 3 is still 0.90 times or more and 0.99 times or less the entire area of the liquid surface of the electrolyte 10.

In particular, when the shape of the plate is a hexagonal shape, as illustrated in Fig. 3, it is easy to arrange a plurality of plates with no gap therebetween, and it is easy to stably maintain the arranged state of the plurality of plates. However, depending on the shape of the tank body 2, a relatively large gap 35b may be formed between the hexagonal split piece 30 and the wall surface of the tank body 2. Even if the gap 35b is formed, the area of the liquid surface of the electrolyte 10 that is covered by the cover member 3 is still 0.90 times or more and 0.99 times or less the entire area of the liquid surface of the electrolyte 10. When the gap 35b is large, a plate having a shape other than a hexagonal shape, for example, a trapezoid plate or a triangle plate may be disposed in the gap 35b.

The plurality of split pieces 30 may include a plurality of plates having different shapes. For example, as described above, a hexagonal plate, a trapezoidal plate, and a triangular plate may be disposed in combination. The plurality of split pieces 30 may include a plurality of plates having different areas regardless of the shape. For example, a split piece 30 having a relatively large area may be disposed in the vicinity of a position where the open end 5A of the first pipe 5 is projected onto the liquid surface of the electrolyte 10. In the vicinity of a position where the open end 5A of the first pipe 5 is projected onto the liquid surface of the electrolyte 10, the liquid surface is likely to be undulated by the electrolyte 10 flowing out from the open end 5A. Since the split pieces 30 having a relatively large area are disposed at the position where the liquid surface of the electrolyte 10 is likely to be undulated, each split piece 30 is less likely to be affected by the flow of the electrolyte 10, and is less likely to be drifted from the predetermined position. The vicinity of the wall surface of the tank body 2 is hardly affected by the flow of the electrolyte 10. Therefore, the split pieces 30 having a relatively small area may be disposed in the vicinity of the wall surface of the tank body 2. As described above, the gap 35b (Fig. 3) may be formed between the split piece 30 and the wall surface of the tank body 2 depending on the shape of the tank body 2 and the shape of the split piece 30. A split piece 30 having a relatively small area may be disposed so as to fill the gap 35b.

When the split piece 30 is a plate, the plate includes a first surface 31 and a second surface 32 (Fig. 1). The first surface 31 is a contact surface with the electrolyte 10. The first surface 31 is, for example, a flat surface. When the surface is a flat surface, it is easy to ensure a large contact area with the electrolyte 10. The second surface 32 faces the first surface 31, and is exposed to the gas phase space 20G to be described later. The second surface 32 may be a flat surface or a curved surface. The second surface 32 may include an inclined surface that descends from the center of the second surface 32 toward the periphery thereof. When the second surface 32 includes such an inclined surface, even if the electrolyte 10 is splashed on the second surface 32, the splashed electrolyte 10 flows down through the inclined surface, and is unlikely to accumulate on the second surface 32. The split piece 30 which includes an inclined surface on the second surface 32 may be disposed in the vicinity of a position where the open end 5A of the first pipe 5 is projected onto the liquid surface of the electrolyte 10. Both the first surface 31 and the second surface 32 may include such an inclined surface. When both the first surface 31 and the second surface 32 include such an inclined surface, even when the split piece 30 is turned upside down by the flow of the electrolyte 10, there is always an inclined surface facing upward.

For example, the split pieces 30 are disposed independently of each other. The split pieces 30 may be connected to each other by a connecting member. The coupling member is, for example, a string. It is preferable that the plurality of split pieces 30 which are disposed at a position susceptible to the flow of the electrolyte 10 are connected to each other by a connecting member.

Each split piece 30 may be a sphere. The sphere may be a solid sphere or a hollow sphere containing gas inside. The sphere containing gas inside is solid only on the surface. The plurality of split pieces 30 formed of spheres may be arranged in a plurality of overlapping layers on the liquid surface of the electrolyte 10. The plurality of split pieces 30 formed of spheres may be placed in a net bag, for example. All the split pieces 30 may be placed in one net bag, or may be placed in a plurality of net bags, each of which may contain a plurality of split pieces 30.

As illustrated in Fig. 4, the cover member 3 may be a single plate. When the cover member is a single plate, it is easy to ensure a large contact area between the cover member 3 and the electrolyte 10, which makes it easy to inhibit oxidation of the electrolyte 10. The single plate may be, for example, a flexible sheet. The cover member formed by a single plate is provided with openings 36 and 37. The cover member 3 formed by a single plate may be provided with a plurality of small through holes (not shown). The plurality of small through holes may be provided in the vicinity of the opening 36, for example. Even if the electrolyte 10 is splashed on the upper surface of the cover member 3, the electrolyte 10 flows down through the small through holes, and is unlikely to accumulate on the cover member 3.

The cover member 3 is made of resin or rubber resistant to the electrolyte 10. The material of the cover member 3, for example, may be the same as the material of the inner surface of the tank body 2.

### <Tank Structure>

With reference to Fig. 5, a tank structure 1P or 1N including the tank 1 described above will be described. The tank 1 illustrated in Fig. 5 is illustrated in a cross section of the tank 1 cut along a plane along the height direction of the tank body 2. The direction illustrated in the upper left of Fig. 5 indicates the arrangement direction of the tank 1. The tank structure 1P circulates the positive electrolyte 106. The tank structure 1N circulates the negative electrolyte 107.

The tank structure 1P includes the tank 1 described above, a first pipe 5P, a second pipe 6P, and a pump 7P. The positive electrolyte 106 is stored in the tank 1. The cover member 3 is disposed to float on the liquid surface of the positive electrolyte 106. Hereinafter, the tank 1 in which the positive electrolyte 106 is stored is referred to as a positive electrolyte tank 104. The first pipe 5P illustrated in Fig. 5 is the same as the first pipe 5 illustrated in Fig. 1. The second pipe 6P illustrated in Fig. 5 is the same as the second pipe 6 illustrated in Fig. 1. The solid arrows drawn inside the first pipe 5P and the second pipe 6P indicate the flow direction of the electrolyte 10.

The first pipe 5P is a pipe for returning the positive electrolyte 106 from a battery cell 100C to the positive electrolyte tank 104. The first pipe 5P of the present embodiment is connected to the tank body 2 so that the open end 5A of the first pipe 5P is disposed inside the tank body 2. The inlet 26 for returning the positive electrolyte 106 back to the positive electrolyte tank 104 is the open end 5A of the first pipe 5P. The inlet 26 of the present embodiment is disposed above a central point of the tank body 2 in the third direction D3. The inlet 26 in the present embodiment is disposed so as not to be immersed in the positive electrolyte 106.

The second pipe 6P is a pipe for sending the positive electrolyte 106 from the positive electrolyte tank 104 to the battery cell 100C. The second pipe 6P of the present embodiment is connected to the tank body 2 so that the open end 6B of the second pipe 6P is disposed inside the tank body 2. The outlet 27 for sending the positive electrolyte 106 from the positive electrolyte tank 104 is the open end 6B of the second pipe 6P. The outlet 27 of the present embodiment is disposed below the central point of the tank body 2 in the third direction D3. The outlet 27 of the present embodiment is disposed so as to be immersed in the positive electrolyte 106.

The pump 7P is provided in the middle of the second pipe 6P. The pump 7P pumps the positive electrolyte 106 in the positive electrolyte tank 104 to the battery cell 100C.

The tank structure 1P of the present embodiment further includes a third pipe 8 and a fourth pipe 9. The third pipe 8 is a pipe for introducing a non-oxidizing gas into the internal space 20 of the tank body 2. The third pipe 8 of the present embodiment is connected to the tank body 2 so that the open end 8A of the third pipe 8 is disposed inside the tank body 2. The intake port 28 for introducing the non-oxidizing gas into the internal space 20 is an open end 8A of the third pipe 8. The fourth pipe 9 is a pipe for discharging the non-oxidizing gas from the internal space 20 of the tank body 2. The fourth pipe 9 of the present embodiment is connected to the tank body 2 so that the open end 9B of the fourth pipe 9 is disposed inside the tank body 2. The exhaust port 29 for discharging the non-oxidizing gas from the internal space 20 is the open end 9B of the fourth pipe 9. Although not illustrated in Fig. 5, each of the third pipe 8 and the fourth pipe 9 is connected to a tank in which the non-oxidizing gas is stored outside the tank body 2. The hollow arrows drawn inside the third pipe 8 and the fourth pipe 9 indicate the flow direction of the non-oxidizing gas. When the non-oxidizing gas is circulated in the internal space 20 via the third pipe 8 and the fourth pipe 9, a gas phase space 20G is formed of the non-oxidizing gas above the cover member 3 in the internal space 20 of the tank body 2. The gas phase space 20G will be described later.

The tank structure 1N includes the tank 1 described above, a first pipe 5N, a second pipe 6N, and a pump 7N. The configuration of the tank structure 1N is the same as that of the tank structure 1P except that the electrolyte flowing through the tank structure 1N is different from the electrolyte flowing through the tank structure 1P. The first pipe 5N, the second pipe 6N, and the pump 7N in the tank structure 1N have the same configuration as the first pipe 5P, the second pipe 6P, and the pump 7P in the tank structure 1P, respectively. The negative electrolyte 107 is stored in the tank 1 of the tank structure 1N. The cover member 3 is disposed to float on the liquid surface of the negative electrolyte 107. Hereinafter, the tank 1 in which the negative electrolyte 107 is stored is referred to as a negative electrolyte tank 105.

The tank structure 1N of the present embodiment further includes a third pipe 8 and a fourth pipe 9. The third pipe 8 and the fourth pipe 9 in the tank structure 1N also have the same configuration as the third pipe 8 and the fourth pipe 9 in the tank structure 1P, respectively.

The basic configuration of each of the first pipes 5P and 5N, the second pipes 6P and 6N, the pumps 7P and 7N, the third pipe 8, and the fourth pipe 9 may be any known configuration.

### <RF Battery System>

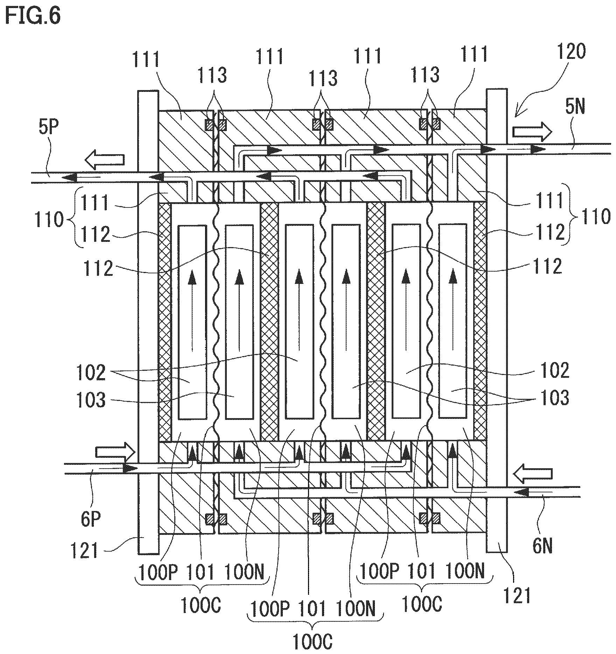

An RF battery system 100 according to an embodiment will be described with reference to Figs. 5 and 6. As illustrated in Fig. 5, the RF battery system 100 includes the battery cell 100C, the above-described tank structure 1P, and the above-described tank structure 1N. In Fig. 5, the battery cell 100C is schematically illustrated, and the positive electrode and the negative electrode of the battery cell 100C are denoted by "+" and "-", respectively. A specific configuration of the battery cell 100C is illustrated in Fig. 6. The basic configuration of the RF battery system 100 may be any known configuration.

The RF battery system 100 charges and stores electric power generated by a power generation unit, discharges the stored electric power, and supplies the discharged electric power to a load. The RF battery system 100 is typically connected to a power generation unit and a load via a power conversion device and a power transformation device. An example of the power generation unit is a solar power generation device, a wind power generation device, or any other general power plant. One example of the load is a power consumer or the like. As an example application, the RF battery system 100 may be used in load leveling, instantaneous voltage drop compensation, emergency power supply, or output smoothing of natural energy such as solar power or wind power.

As illustrated in Fig. 6, the battery cell 100C is partitioned into a positive electrode cell 100P and a negative electrode cell 100N by a membrane 101. A positive electrode 102 is built in the positive electrode cell 100P. The positive electrolyte 106 (Fig. 5) is supplied to the positive electrode cell 100P. A negative electrode 103 is built in the negative electrode cell 100N. The negative electrolyte 107 (Fig. 5) is supplied to the negative electrode cell 100N. The battery cell 100C is sandwiched between a pair of cell frames 110. The cell frame 110 includes a bipolar plate 112 and a frame 111. The positive electrode 102 is disposed on a first surface of the bipolar plate 112, and the negative electrode 103 is disposed on a second surface of the bipolar plate 112. The frame 111 is provided on the outer periphery of the bipolar plate 112. The frame 111 supports the bipolar plate 112. A sealing member 113 is disposed between the frames 111 to prevent the positive electrolyte 106 and the negative electrolyte 107 from leaking from the battery cell 100C.

The RF battery system 100 is typically used in a form called a cell stack 120 in which a plurality of battery cells 100C are stacked. The cell stack 120 includes a stacked body in which one cell frame 110, the positive electrode 102, the membrane 101, the negative electrode 103, and another cell frame 110 are repeatedly stacked, two end plates 121 that sandwiches the stacked body, and a fastening member (not shown). The fastening member may be, for example, a long bolt and a nut. The two end plates 121 are fastened by the fastening member. Thus, the stacked body is maintained at the stacked state. The cell stack 120 is typically used in a form in which a predetermined number of battery cells 100C are formed as a sub-stack (not shown) and a plurality of sub-stacks are stacked. A supply/discharge plate (not shown) is disposed outside the cell frame 110 located at both ends of the sub-stack or the cell stack 120 in the stacking direction of the battery cells 100C.

As illustrated in Fig. 5, the positive electrolyte 106 is circulated in the positive electrode cell 100P by the tank structure 1P. The positive electrolyte 106 is pumped from the positive electrolyte tank 104 to the positive electrode 102 (Fig. 6) in the positive electrode cell 100P through the second pipe 6P by the pump 7P. The positive electrolyte 106 that has circulated through the positive electrode 102 is returned to the positive electrolyte tank 104 through the first pipe 5P. When the pump 7P is stopped, the positive electrolyte 106 is not circulated.

As illustrated in Fig. 5, the negative electrolyte 107 is circulated in the negative electrode cell 100N by the tank structure 1N. The negative electrolyte 107 is pumped from the negative electrolyte tank 105 to the negative electrode 103 (Fig. 6) in the negative electrode cell 100N through the second pipe 6N by the pump 7N. The negative electrolyte 107 that has circulated through the negative electrode 103 is returned to the negative electrolyte tank 105 through the first pipe 5N. When the pump 7N is stopped, the negative electrolyte 107 is not circulated.

In the RF battery system 100, the positive electrolyte 106 is circulated to the positive electrode 102, and the negative electrolyte 107 is circulated to the negative electrode 103 to charge or discharge the battery in accordance with the valence change reaction of the active material ions in the electrolyte of each electrode.

The positive electrolyte 106 contains, for example, one or more selected from the group consisting of manganese ions, vanadium ions, iron ions, poly acids, quinone derivatives, and amines as the positive electrode active material. The negative electrolyte 107 contains, for example, one or more selected from the group consisting of titanium ions, vanadium ions, chromium ions, poly acids, quinone derivatives, and amines as the negative electrode active material. The solvent of the positive electrolyte 106 and the negative electrolyte 107 is, for example, an aqueous solution containing one or more acids or acid salts selected from the group consisting of sulfuric acid, phosphoric acid, nitric acid, and hydrochloric acid. As a specific example, both the positive electrolyte and the negative electrolyte contain vanadium ions. As another example, the positive electrolyte contains manganese ions and the negative electrolyte contains titanium ions. The concentration of the positive electrode active material and the concentration of the negative electrode active material may be appropriately selected.

In the RF battery system 100 of the present embodiment, as illustrated in Fig. 5, each of the positive electrolyte tank 104 and the negative electrolyte tank 105 includes a gas phase space 20G in the tank body 2. The gas phase space 20G is provided above the cover member 3 in the internal space 20 of the tank body 2. The non-oxidizing gas is circulated in the gas phase space 20G through the third pipe 8 and the fourth pipe 9. The non-oxidizing gas is constantly circulated during the operation of the RF battery system 100. The non-oxidizing gas is, for example, nitrogen. The non-oxidizing gas significantly inhibits oxidation of the electrolyte 10 stored in the internal space 20. The non-oxidizing gas may include inevitable oxygen. Even if inevitable oxygen is present in the gas phase space 20G, oxidation of the electrolyte 10 is inhibited because the cover member 3 is disposed on the liquid surface of the electrolyte 10. Even if the amount of oxygen in the gas phase space 20G is very small, the energy density of the RF battery system 100 may greatly decrease due to oxidation of the electrolyte 10 in a long term. Even when the amount of oxygen is small, since oxidation of the electrolyte 10 is inhibited by the cover member 3, oxidation of the electrolyte 10 is inhibited in a long term, and a decrease in the energy density of the RF battery system 100 is inhibited in a long term.

Due to the battery reaction in the battery cell 100C, hydrogen gas may be generated in the electrolyte. The hydrogen gas flows into the gas phase space 20G through the openings 36 and 37 or the gaps 35a and 35b provided in the cover member 3, and is discharged from the fourth pipe 9 to the outside of the internal space 20 together with the non-oxidizing gas.

When the non-oxidizing gas is circulated in the gas phase space 20G, moisture in the electrolyte may be evaporated. Since the cover member 3 is disposed on the liquid surface of the electrolyte 10, moisture in the electrolyte is unlikely to be evaporated. Since the evaporation of moisture is inhibited, a temperature rise is inhibited, and precipitation of active material ions in the electrolyte 10 is inhibited.

If the cover member 3 is not disposed on the liquid surface of the electrolyte 10 stored in the internal space 20, the liquid surface of the electrolyte 10 is exposed to the gas phase space 20G. The flow resistance of the liquid surface of the electrolyte 10 exposed to the gas phase space 20G and the vicinity thereof is smaller than the flow resistance of the inside of the electrolyte 10. Due to the difference in the flow resistance, the flow velocity is fast at the liquid surface of the electrolyte 10 and in the vicinity thereof, the flow velocity is slow inside the electrolyte 10, and thereby the flow of the electrolyte 10 becomes uneven. **In** particular, in the case of a horizontally long tank body such as a container-type tank body 2, if the cover member 3 is not disposed on the liquid surface of the electrolyte 10, the area of the liquid surface of the electrolyte 10 exposed to the gas phase space 20G is relatively large, and thereby the flow of the electrolyte 10 is likely to become uneven. When the cover member 3 is disposed on the liquid surface of the electrolyte 10, the flow resistance of the liquid surface of the electrolyte 10 and the vicinity thereof is increased, and thus the flow of the electrolyte 10 is likely to become uniform even in the case of a horizontally long tank body such as a container-type tank body 2. Since the flow of the electrolyte 10 is uniform, the electrolyte 10 stored in the internal space 20 may be utilized efficiently.

### REFERENCE SIGNS LIST

1: tank; 1P, 1N: tank structure; 10: electrolyte; 2: tank body; 20: internal space; 20G: gas phase space; 21: first end wall; 22: second end wall; 23: top wall; 24: bottom wall; 25: side wall; 26: inlet; 27: outlet; 28: intake port; 29: exhaust port; D1: first direction; D2: second direction; D3: third direction; 3: cover member; 30: split piece; 31: first face; 32: second face; 35a, 35b: gap; 36, 37: opening; 5, 5P, 5N: first pipe; 5A: open end; 5w: guide member; 6, 6P, 6N: second pipe; 6B: open end; 7P, 7N: pump; 8: third pipe; 8A: open end; 9: fourth pipe; 9B: open end; 100: redox flow battery system (RF battery system); 100C: battery cell; 101: membrane; 100P: positive electrode cell; 100N: negative electrode cell; 102: positive electrode; 103: negative electrode; 104: positive electrolyte tank; 105: negative electrolyte tank; 106: positive electrolyte; 107: negative electrolyte; 110: cell frame; 111: frame; 112: bipolar plate; 113: sealing member; 120: cell stack; 121: end plate.

## Claims

1. A tank for storing an electrolyte in a redox flow battery system, the tank comprising:
a tank body which has an internal space separated from the outside; and
a cover member, at least a surface of which is solid,
the cover member being disposed to float on a liquid surface of the electrolyte stored in the internal space so as to cover the liquid surface, and
an area of the liquid surface that is covered by the cover member being 0.90 times or more and 0.99 times or less the entire area of the liquid surface.

2. The tank according to claim 1, wherein
a maximum length of the tank body in the horizontal direction is longer than a height of the tank body.

3. The tank according to claim 1 or claim 2, wherein
the cover member is formed of a plurality of split pieces.

4. The tank according to claim 3, wherein
an area of the liquid surface that is covered by each of the plurality of split pieces is 0.002 times or more and 0.99 times or less the entire area of the liquid surface.

5. The tank according to claim 3 or claim 4, wherein
each of the plurality of split pieces is a plate.

6. The tank according to claim 5, wherein
the plate has a quadrangular shape or a hexagonal shape.

7. The tank according to claim 3 or claim 4, wherein
each of the plurality of split pieces is a plate, and
the plate has a hexagonal shape.

8. The tank according to claim 1 or claim 2, wherein
the cover member is a single plate.

9. The tank according to any one of claims 1 to 8, wherein
the tank body is provided with an intake port and an exhaust port configured to circulate a non-oxidizing gas in the internal space.

10. A redox flow battery system comprising the tank according to any one of claims 1 to 9.

11. The redox flow battery system according to claim 10, further comprising:
the electrolyte stored in the internal space,
wherein the tank body includes a gas phase space in which a non-oxidizing gas is circulated above the cover member in the internal space.
